# EUROPÄISCHE PATENTSCHRIFT

(11) **EP 3 815 890 B1**
(45) Veröffentlichungstag und Bekanntmachung des Hinweises auf die Patenterteilung: **15.03.2023**
(21) Anmeldenummer: 20201226.6
(22) Anmeldetag: 12.10.2020
(51) Int. Cl.: B29D 30/06, B60C 11/12

(54) **FORMELEMENT, VULKANISATIONSFORM UND FAHRZEUGLUFTREIFEN**
SHAPED ELEMENT, VULCANISATION MOULD AND PNEUMATIC TYRE FOR A VEHICLE
ÉLÉMENT MOULÉ, MOULE DE VULCANISATION ET PNEUMATIQUE DE VÉHICULE

(30) Priorität: 04.11.2019 DE 102019216917
(43) Veröffentlichungstag der Anmeldung: 05.05.2021
(73) Patentinhaber: Continental Reifen Deutschland GmbH, 30165 Hannover (DE)
(72) Erfinder: Hoppe, Nicholas, 30419 Hannover (DE); Dzick, Jürgen, 30419 Hannover (DE)
(74) Vertreter: Continental Corporation

(56) Entgegenhaltungen:
- EP-A2- 0 705 721
- EP-B1- 0 705 721
- DE-A1-102015 202 328
- KR-B1- 101 037 410
- US-A1- 2014 130 950

## Beschreibung

Die Erfindung betrifft ein Formelement, insbesondere eine Lamelle oder eine Rippe, zum Ausformen eines Einschnittes oder einer Rille im Laufstreifen eines Fahrzeugluftreifens während dessen Vulkanisation in einer Reifenvulkanisationsform, mit einem Verankerungsabschnitt zum Verankern des Formelementes in einem Formsegment der Reifenvulkanisationsform und mit einem Ausformungsabschnitt, welcher den Einschnitt oder die Rille im Laufstreifen des in die Reifenvulkanisationsform eingesetzten Reifens ausformt, wobei das Formelement nach einem additiven Verfahren aus einem Metallpulver hergestellt ist, wobei der Ausformungsabschnitt an seinem dem Verankerungsabschnitt abgewandten Randbereich eine Reihe von Elementen aufweist, deren größte Abmessung quer zum Ausformungsabschnitt größer ist als die Dicke des Ausformungsabschnittes.

Es ist bekannt, Bestandteile von Vulkanisationsformen, beispielsweise Formelemente, wie Lamellen oder Rippen, die zur Ausformung der Profilierung des Laufstreifens mit Einschnitten und Rillen vorgesehen sind, durch ein additives Fertigungsverfahren, beispielsweise durch selektives Laserschmelzen, aus einem Metallpulver herzustellen. Beispielsweise ist es aus der DE 10 2015 202 328 A1 bekannt, Lamellen durch selektives Laserschmelzen herzustellen.

Die KR 101 037 410 B1 offenbart einen Nutzfahrzeugreifen mit einem Laufstreifen mit Profilblöcken mit Einschnitten, welche jeweils einen Grundabschnitt aufweisen, der aus einer Reihe von aneinander anschließenden Erweiterungen besteht. Bei einem der Ausführungsbeispiele weist der Einschnitt einen rohrförmigen und mehrfach nach dem Venturi-Prinzip verengten Grundabschnitt auf und setzt sich aus zumindest im Wesentlichen tonnenförmigen, ersten Erweiterungen und alternierend mit diesen ausgebildeten, zweiten Erweiterungen, welche im Wesentlichen die Form von einschaligen Rotationshyperboloiden aufweisen, zusammen. Die KR 101 037 410 B1 offenbart somit auch eine Lamelle der eingangs genannten Art. Die mit solchen Lamellen ausgestalteten, oben beschriebenen Einschnitte sollen dem Reifen gute Bremseigenschaften auf nasser und mit Eis bedeckter Fahrbahn sowie ein gutes Wasserableitvermögen verleihen.

Es ist ferner bekannt, in Profilpositiven, etwa Profilblöcken, von Laufstreifen von Fahrzeugluftreifen Einschnitte auszubilden, welche ausgehend von der Laufstreifenperipherie einen radial äußeren Abschnitt aufweisen, in welchem die Einschnittbreite 0,4 bis 0,8 mm beträgt, und an welchen am Einschnittgrund ein Abschnitt anschließt, welcher gegenüber dem äußeren Abschnitt verbreitert ist und im Querschnitt einen beispielsweise kreisbogenförmig gekrümmten Einschnittgrund bildet. Ein derartiger Fahrzeugluftreifen ist beispielsweise aus der EP 2 072 286 B1 bekannt. Zwischen den Abschnitten ist ein gerundeter Übergangsabschnitt vorgesehen.

Erweiterte Grundabschnitte in Einschnitten sind bei Reifen, die unter winterlichen Fahrbedingungen, insbesondere auf mit Eis bedeckten Fahrbahnen, eingesetzt werden, von Vorteil, da sie in der Lage sind, das durch die Reibenergie zwischen dem Laufstreifen des Reifens und dem Eis gebildete Schmelzwasser bzw. den gebildeten Schmelzwasserfilm aufzunehmen und abzuleiten. Auf diese Weise ist für eine optimalen Kontakt zwischen dem Laufstreifen und dem Untergrund gesorgt.

Der Erfindung liegt die Aufgabe zugrunde, Formelemente derart zu gestalten, dass sie auf exakte und rationelle Weise durch ein additives Fertigungsverfahren derart gestaltbar sind, dass sie im Laufstreifen des Reifens Einschnitte oder Rillen mit erweiterten Grundabschnitten ausbilden.

Gelöst wird die gestellte Aufgabe erfindungsgemäß dadurch, dass die Elemente ellipsoidförmige Elemente mit zwei oder drei verschieden großen Halbachsen oder kugelige Elemente sind, wobei die Elemente unter gegenseitiger Überlappung angeordnet sind.

Diese Ausgestaltung gestattet es, im additiven Fertigungsverfahren separate, vergleichsweise einfache Konstruktionsdaten für die ellipsoidförmigen Elemente zur Verfügung zu stellen, sodass beim Druck des Formelementes unterschiedliche Druckparameter für die ellipsoidförmigen Elemente und den sonstigen Teil des Formelementes verwendet werden können, um eine besonders exakte Gestaltung jener Bestandteile des Formelementes zu ermöglichen, welche im Laufstreifen des Reifens erweiterte Grundabschnitte ausbilden.

Besonders bevorzugt ist eine Ausführung, bei welcher die Elemente übereinstimmende Dimensionen aufweisen, womit eine Vereinfachung der Konstruktionsdaten zum Aufbau der Elemente verbunden ist.

Bevorzugt beträgt die größte Abmessung der Elemente quer zum Ausformungsabschnitt das Zwei- bis Fünffache, insbesondere das Zwei- bis Dreifache, der Dicke des Ausformungsabschnittes und die gegenseitige Überlappung der Elemente beträgt insbesondere 5 % bis 20 % ihrer größten Abmessung quer zum Ausformungsabschnitt. Mit derartigen Formelementen lassen sich Grundabschnitte ausformen, die für den Effekt der Ableitung von Wasser besonders vorteilhaft sind.

Die Erfindung betrifft ferner eine Vulkanisationsform für einen Fahrzeugluftreifen, welcher gemäß der Erfindung gestaltete Formelemente enthält.

Die Erfindung betrifft ferner einen Fahrzeugluftreifen mit einem Laufstreifen mit Profilpositiven sowie mit Einschnitten und/oder Rillen, welche erweiterte Grundabschnitte aufweisen, die aus einer Reihe von aneinander anschließenden Erweiterungen bestehen, wobei die Erweiterungen ellipsoidförmige Erweiterungen mit zwei oder drei verschieden großen Halbachsen oder kugelige Erweiterungen sind und wobei die Erweiterungen unter gegenseitiger Überlappung angeordnet sind. Die ellipsoidförmigen Erweiterungen reduzieren Kerbspannungen im Bereich des Einschnitt- bzw. Rillengrundes, verhindern daher das Entstehen von Einrissen in diesem Bereich und begünstigen eine Wasserableitung.

Besonders bevorzugt ist dabei eine Ausführung, bei der die Erweiterungen übereinstimmende Dimensionen aufweisen, sodass eine gleichmäßige Verteilung der auftretenden Spannungen für eine gute Rissbeständigkeit sorgt und ferner eine für eine gute Wasserableitung über die Erstreckung des Einschnittes gewährleistet ist.

Bevorzugt beträgt die größte Abmessung der Erweiterungen quer zur Erstreckung der Rille bzw. des Einschnittes das Zwei- bis Fünffache, insbesondere das Zwei- bis Dreifache, der Breite der Rille oder des Einschnittes. Die gegenseitige Überlappung der Erweiterungen beträgt insbesondere 5 % bis 20 % ihrer größten Abmessung quer zur Erstreckung der Rille bzw. des Einschnittes.

Weitere Merkmale, Vorteile und Einzelheiten der Erfindung werden nun anhand der schematischen Zeichnung, die Ausführungsbeispiele darstellt, näher beschrieben. Dabei zeigen
Fig. 1 eine Ansicht eines Profilbockes eines Laufstreifens eines Fahrzeugluftreifens,
Fig. 2 einen Querschnitt eines Einschnittes und
Fig. 3 eine Ansicht eines Formelementes.

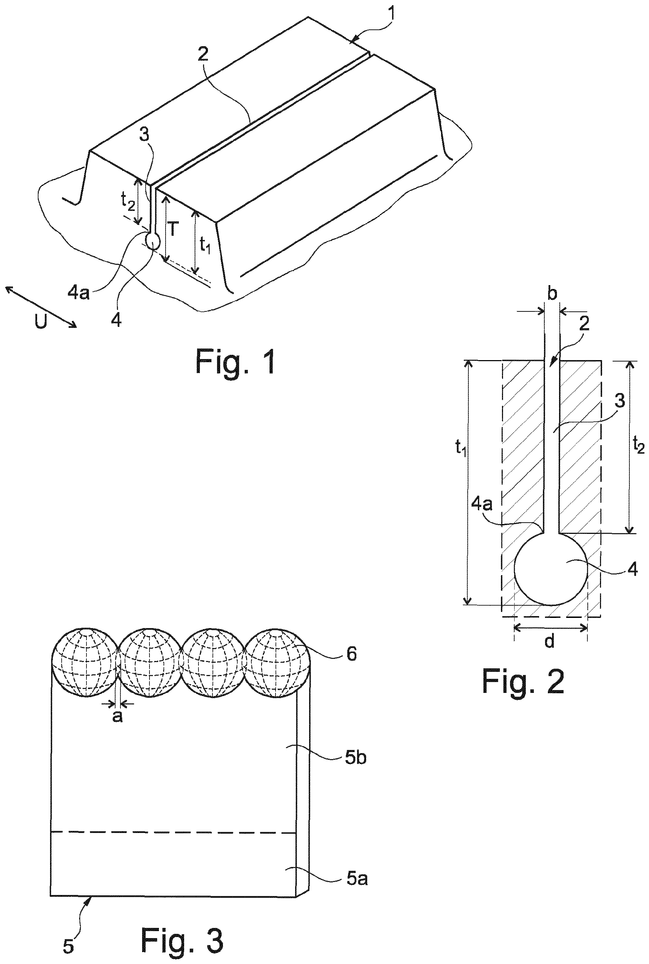

Fig. 1 zeigt eine Ansicht eines vereinfachten Profilblockes 1 im Laufstreifen eines Fahrzeugluftreifens, welcher insbesondere ein Reifen in Radialbauart für Personenkraftwagen, Vans oder Light-Trucks ist. Die Umfangsrichtung des Laufstreifens ist durch den Doppelpfeil U gekennzeichnet.

Der Profilblock 1 ist in der Umfangsrichtung U von Umfangsrillen begrenzt und gehört insbesondere zu einer in Umfangsrichtung des Laufstreifens umlaufenden Profilblockreihe, innerhalb welcher die Profilblöcke durch Querrillen voneinander getrennt sind. Beim gezeigten Ausführungsbespiel ist der Profilblock 1 mit einem in axialer Richtung verlaufenden Einschnitt 2 versehen, der den Profilblock 1 durchquert. Die maximale Tiefe T der Umfangsrillen, welche der für den jeweiligen Fahrzeugluftreifen vorgesehenen Profiltiefe entspricht, beträgt insbesondere 6,0 mm bis 10,0 mm. Gemäß Fig. 2, welche einen Querschnitt eines Einschnittes 2 im mittleren Bereich des Profilblockes 1 zeigt, reicht der Einschnitt 2 in radialer Richtung bis in eine Tiefe t₁, welche 70 % bis 100 % der Tiefe T der Umfangsrillen beträgt. Bei der dargestellten, vereinfachten Ausführung weist jeder Einschnitt 2 eine über seine Erstreckung konstante Tiefe ti auf. Der Einschnitt 2 kann jedoch seitliche, in Umfangsrillen mündende Abschnitte aufweisen, die eine geringere Tiefe als die Tiefe ti besitzen.

Jeder Einschnitt 2 weist von der Laufstreifenperipherie ausgehend einen Einschnittabschnitt 3 auf, welcher eine konstante oder variierende Breite b von üblicherweise 0,4 mm bis 0,8 mm besitzt. Der Einschnittabschnitt 3 reicht beispielsweise bis in eine Tiefe t₂, welche 70 % bis 80 % der Tiefe ti beträgt und mündet im Bereich des Einschnittgrundes mittig in eine Reihe von Erweiterungen 4. Die Erweiterungen 4 sind ellipsoidförmig, bei der dargestellten Ausführung mit drei gleich großen Halbachsen, daher kugelig. Bei weiteren nicht gezeigten Ausführungen weisen die ellipsoidförmigen Erweiterungen zwei oder drei verschieden große Halbachsen auf.

Fig. 2 zeigt einen Querschnitt des Einschnittes 2 mittig durch eine dieser kugeligen Erweiterungen 4, wobei der Übergang vom Einschnittabschnitt 3 in die kugeligen Erweiterungen 4 über Kanten 4a erfolgt. Die einzelnen kugeligen Erweiterungen 4 besitzen übereinstimmende Dimensionen, daher gleich große Durchmesser d, welche vorzugsweise das Zweifache bis Fünffache, insbesondere das Zweifache bis Dreifache, der Breite b des Einschnittabschnittes 3 betragen. Die kugeligen Erweiterungen 4 schließen mit einer gegenseitigen Überlappung aneinander an, welche in der Größenordnung von 5 % bis 20 % des Durchmessers d beträgt.

Fig. 3 zeigt eine Ansicht eines Formelementes 5, welches einen Einschnitt 2 im Profilblock 1 während der Vulkanisation des Fahrzeugluftreifens ausformt. Das Formelement 5 wird bei der Herstellung der den Laufstreifen des Reifens ausformenden Segmente eines Segmentringes der Vulkanisationsform eingegossen weist einen vergleichsweise schmalen Verankerungsabschnitt 5a auf, welcher den Eingussbereich bildet. Das Formelement 5 weist ferner einen an den Verankerungsabschnitt 5a anschließenden Ausformungsabschnitt 5b auf, welcher im Laufstreifen des zu vulkanisierenden Reifens den Einschnittabschnitt 3 ausformt und an seinem dem Verankerungsabschnitt 5a gegenüberliegenden Randbereich eine Reihe von ellipsoidförmigen, im Beispiel kugeligen Elementen 6 mit Durchmessern d aufweist, die im Laufstreifen des Reifens die kugeligen Erweiterungen 4 ausbilden. Die kugeligen Element 6 schließen mit einer gegenseitigen Überlappung a aneinander an, welche in der Größenordnung von 5 % bis 20 % des Durchmessers d beträgt. Die Grenze zwischen dem Verankerungsabschnitt 5a und dem Ausformungsabschnitt 5b, welche sich, wenn das Formelement 5 im Formsegment eingegossen ist, am Niveau der zur Formkavität weisenden Formseite befindet, ist durch eine gestrichelte Linie angedeutet.

Die Formelemente 5 werden durch ein additives Fertigungsverfahren, beispielsweise durch selektives Laserschmelzen, aus einem Metallpulver hergestellt. Der additive Aufbau bzw. Druck erfolgt softwaregesteuert über CAD-Daten, wobei die kugeligen Elemente 6 als separate Bestandteile konstruiert und programmiert sind, sodass für den Druck der kugeligen Elemente spezielle Druckparameter gewählt werden können. So kann das Formelement 5 abgesehen von den ellipsoidförmigen bzw. kugeligen Elementen 6 mit relativ geringen Schichtstärken von beispielsweise 40 µm sehr rationell gedruckt werden, wohingegen die ellipsoidförmigen bzw. kugeligen Elemente 6 im gleichen Druckprozess selektiv mit einer wesentlich höheren Auflösung, also mit Schichtstärken von beispielsweise 10 µm, gedruckt werden.

Die kugeligen Erweiterungen 4 bzw. kugeligen Elemente können auch am Grund von Rillen bzw. an Formelementen, die Rillen ausformen, und/oder lediglich über einen Abschnitt des Grundes bzw. des Formelementes ausgebildet sein.

### Bezugsziffernliste

- 1: Profilblock
- 2: Einschnitt
- 3: Einschnittabschnitt
- 4: Erweiterung
- 4a: Kante
- 5: Formelement
- 5a: Verankerungsabschnitt
- 5b: Ausformungsabschnitt
- 6: Element
- a: Überlappung
- b: Breite
- d: Durchmesser
- U: Umfangsrichtung des Laufstreifens
- T, t₁, t₂: Tiefe

## Patentansprüche

1. Formelement (5), insbesondere eine Lamelle oder eine Rippe, zum Ausformen eines Einschnittes (2) oder einer Rille im Laufstreifen eines Fahrzeugluftreifens während dessen Vulkanisation in einer Reifenvulkanisationsform, mit einem Verankerungsabschnitt (5a) zum Verankern des Formelementes (5) in einem Formsegment der Reifenvulkanisationsform und mit einem Ausformungsabschnitt (5b), welcher den Einschnitt (2) oder die Rille im Laufstreifen des in die Reifenvulkanisationsform eingesetzten Reifens ausformt, wobei das Formelement (5) nach einem additiven Verfahren aus einem Metallpulver hergestellt ist,
wobei der Ausformungsabschnitt (5b) an seinem dem Verankerungsabschnitt (5a) abgewandten Randbereich eine Reihe von Elementen (6) aufweist, deren größte Abmessung quer zum Ausformungsabschnitt (5b) größer ist als die Dicke des Ausformungsabschnittes (5b),
**dadurch gekennzeichnet,**
**dass** die Elemente (6) ellipsoidförmige Elemente (6) mit zwei oder drei verschieden großen Halbachsen oder kugelige Elemente sind, wobei die Elemente (6) unter gegenseitiger Überlappung angeordnet sind.

2. Formelement (5) nach Anspruch 1, **dadurch gekennzeichnet, dass** die Elemente (6) übereinstimmende Dimensionen aufweisen.

3. Formelement (5) nach Anspruch 1 oder 2, **dadurch gekennzeichnet, dass** die größte Abmessung der Elemente (6) quer zum Ausformungsabschnitt (5b) das Zwei- bis Fünffache, insbesondere das Zwei- bis Dreifache, der Dicke des Ausformungsabschnittes (5b) beträgt.

4. Formelement (5) nach einem der Ansprüche 1 bis 3, **dadurch gekennzeichnet, dass** die gegenseitige Überlappung (a) der Elemente (6) 5 % bis 20 % ihrer größten Abmessung quer zum Ausformungsabschnitt beträgt.

5. Vulkanisationsform für einen Fahrzeugluftreifen, welcher Formelemente (5) nach einem oder mehreren der Ansprüche 1 bis 4 enthält.

6. Fahrzeugluftreifen mit einem Laufstreifen mit Profilpositiven sowie mit Einschnitten (2) und/oder Rillen, welche erweiterte Grundabschnitte aufweisen, die aus einer Reihe von aneinander anschließenden Erweiterungen (4) bestehen, **dadurch gekennzeichnet,**
**dass** die Erweiterungen (4) ellipsoidförmige Erweiterungen (4) mit zwei oder drei verschieden großen Halbachsen oder kugelige Erweiterungen sind, wobei die Erweiterungen (4) unter gegenseitiger Überlappung angeordnet sind.

7. Fahrzeugluftreifen nach Anspruch 6, **dadurch gekennzeichnet, dass** die Erweiterungen (4) übereinstimmende Dimensionen aufweisen.

8. Fahrzeugluftreifen nach Anspruch 6 oder 7, **dadurch gekennzeichnet, dass** die größte Abmessung der Erweiterungen (4) quer zur Erstreckung der Rille bzw. des Einschnittes das Zwei- bis Fünffache, insbesondere das Zwei- bis Dreifache, der Breite (b) der Rille oder des Einschnittes beträgt.

9. Fahrzeugluftreifen nach einem der Ansprüche 6 bis 8, **dadurch gekennzeichnet, dass** die gegenseitige Überlappung der Erweiterungen (4) 5 % bis 20 % ihrer größten Abmessung quer zur Erstreckung der Rille bzw. des Einschnittes beträgt.

## Claims

1. Mould element (5), in particular a sipe or rib, for forming a sipe (2) or a groove in the tread strip of a pneumatic vehicle tyre during its vulcanization in a tyre vulcanization mould, with an anchoring portion (5a) for anchoring the mould element (5) in a mould segment of the tyre vulcanization mould and with a forming portion (5b) which forms the sipe (2) or the groove in the tread strip of the tyre which is inserted into the tyre vulcanization mould, the mould element (5) being produced from a metal powder in accordance with an additive method,
the forming portion (5b) having, on its end region which faces away from the anchoring portion (5a), a row of elements (6), the greatest dimension of which transversely with respect to the forming portion (5b) is greater than the thickness of the forming portion (5b),
**characterized**
**in that** the elements (6) are ellipsoidal elements (6) with two or three half-axes of different size or spherical elements, the elements (6) being arranged so as to overlap mutually.

2. Mould element (5) according to Claim 1, **characterized in that** the elements (6) have matching dimensions.

3. Mould element (5) according to Claim 1 or 2, **characterized in that** the greatest dimension of the elements (6) transversely with respect to the forming portion (5b) is from two to five times, in particular from two to three times, the thickness of the forming portion (5b).

4. Mould element (5) according to one of Claims 1 to 3, **characterized in that** the mutual overlap (a) of the elements (6) is from 5% to 20% of their greatest dimension transversely with respect to the forming portion.

5. Vulcanization mould for a pneumatic vehicle tyre, which vulcanization mould contains mould elements (5) according to one of more of Claims 1 to 4.

6. Pneumatic vehicle tyre with a tread strip with positive profiles and with sipes (2) and/or grooves which have widened base portions which consist of a row of widened portions (4) which adjoin one another,
**characterized**
**in that** the widened portions (4) are ellipsoidal widened portions (4) with two or three half-axes of different size or spherical widened portions, the widened portions (4) being arranged so as to overlap mutually.

7. Pneumatic vehicle tyre according to Claim 6, **characterized in that** the widened portions (4) have matching dimensions.

8. Pneumatic vehicle tyre according to Claim 6 or 7, **characterized in that** the greatest dimension of the widened portions (4) transversely with respect to the extent of the groove or the sipe is from two to five times, in particular from two to three times, the width (b) of the groove or the sipe.

9. Pneumatic vehicle tyre according to one of Claims 6 to 8, **characterized in that** the mutual overlap of the widened portions (4) is from 5% to 20% of their greatest dimension transversely with respect to the extent of the groove or the sipe.

## Revendications

1. Élément de moule (5), notamment une lamelle ou une nervure, pour former une incision (2) ou une rainure dans la bande de roulement d'un pneumatique de véhicule pendant sa vulcanisation dans un moule de vulcanisation de pneu, comprenant une section d'ancrage (5a) pour l'ancrage de l'élément de moule (5) dans un segment de moule du moule de vulcanisation de pneu et comprenant une section de formage (5b) qui forme l'incision (2) ou la rainure dans la bande de roulement du pneu inséré dans le moule de vulcanisation de pneu, l'élément de moule (5) étant fabriqué à partir d'une poudre métallique selon un procédé additif, la section de formage (5b) présentant, sur sa zone de bord détournée de la section d'ancrage (5a), une série d'éléments (6) dont la dimension maximale transversalement à la section de formage (5b) est supérieure à l'épaisseur de la section de formage (5b),
**caractérisé en ce que**
les éléments (6) sont des éléments (6) de forme ellipsoïdale avec deux ou trois demi-axes de tailles différentes ou des éléments sphériques, les éléments (6) étant agencés avec un chevauchement mutuel.

2. Élément de moule (5) selon la revendication 1, **caractérisé en ce que** les éléments (6) présentent des dimensions qui coïncident.

3. Élément de moule (5) selon la revendication 1 ou 2, **caractérisé en ce que** la dimension maximale des éléments (6) transversalement à la section de formage (5b) est de deux à cinq fois, notamment de deux à trois fois, l'épaisseur de la section de formage (5b).

4. Élément de moule (5) selon l'une quelconque des revendications 1 à 3, **caractérisé en ce que** le chevauchement mutuel (a) des éléments (6) est de 5 % à 20 % de leur dimension maximale transversalement à la section de formage.

5. Moule de vulcanisation pour un pneumatique de véhicule, qui contient des éléments de moule (5) selon une ou plusieurs des revendications 1 à 4.

6. Pneumatique de véhicule comprenant une bande de roulement avec des profilés positifs ainsi que des incisions (2) et/ou des rainures qui présentent des section de base élargies qui sont constituées d'une série d'élargissements (4) contigus les uns aux autres,
**caractérisé en ce que**
les élargissements (4) sont des élargissements (4) de forme ellipsoïdale avec deux ou trois demi-axes de tailles différentes ou des élargissements sphériques, les élargissements (4) étant agencés avec un chevauchement mutuellement.

7. Pneumatique de véhicule selon la revendication 6, **caractérisé en ce que** les élargissements (4) présentent des dimensions qui coïncident.

8. Pneumatique de véhicule selon la revendication 6 ou 7, **caractérisé en ce que** la dimension maximale des élargissements (4) transversalement à l'étendue de la rainure ou de l'incision est de deux à cinq fois, notamment de deux à trois fois, la largeur (b) de la rainure ou de l'incision.

9. Pneumatique de véhicule selon l'une quelconque des revendications 6 à 8, **caractérisé en ce que** le chevauchement mutuel des élargissements (4) est de 5 % à 20 % de leur dimension maximale transversalement à l'étendue de la rainure ou de l'incision.
